# EUROPÄISCHE PATENTSCHRIFT

(11) **EP 2 154 054 B1**
(45) Veröffentlichungstag und Bekanntmachung des Hinweises auf die Patenterteilung: **10.11.2010**
(21) Anmeldenummer: 09009082.0
(22) Anmeldetag: 11.07.2009
(51) Int. Cl.: B62D 65/02

(54) **Verfahren zum Positionieren und Fügen von Karosserieteilen**
Method for positioning and joining bodywork sections
Procédé de positionnement et d'assemblage de pièces de carrosserie

(30) Priorität: 12.08.2008 DE 102008038747
(43) Veröffentlichungstag der Anmeldung: 17.02.2010
(73) Patentinhaber: Bayerische Motoren Werke Aktiengesellschaft, 80809 München (DE)
(72) Erfinder: Van Niekerk, Johann, 80993 München (DE); Wolf, Sonja, 81675 München (DE)

(56) Entgegenhaltungen:
- EP-A- 1 285 793
- DE-A1-102004 048 464

## Beschreibung

Die vorliegende Erfindung betrifft ein Verfahren zum Positionieren und Fügen von Karosserieteilen gemäß den Merkmalen des Patentanspruches 1.

Aus der DE 10 2004 048 464 A1 ist eine Halterungsvorrichtung zum Fixieren von Bauteilen nach dem Oberbegriff von Anspruch 1 bekannt. Die EP 1 285 793 A1 beschreibt ein Verfahren und eine Vorrichtung zur Herstellung einer Tür oder Klappe.

In der Großserienfertigung werden Fahrzeugkarosserien weitgehend vollautomatisiert aus einer Vielzahl einzelner Karosserieteile zusammengebaut. Bei einem Fügevorgang werden zwei oder mehrere Karosserieteile zunächst mittels aufwändiger Spann- und Aufnahmetechnik relativ zueinader positioniert und anschließend miteinander verbunden, z. B. durch Schweißen, Clinchen oder andere Fügeverfahren. Um eine hohe Maßhaltigkeit der Fahrzeugkarosserie sicherzustellen, kommt es darauf an, dass die zu fügenden Karosserieteile vor dem Verbinden möglichst exakt relativ zueinander positioniert sind. Bei herkömmlichen Fertigungsanlagen wird ein zu fügendes Karosserieteil zunächst mittels mechanischer Spannvorrichtungen exakt in Bezug auf die Anlage bzw. in Bezug auf ein anderes Bauteil positioniert. Anschließend werden die zu fügenden Teile gefügt. Dieses Verfahren zur Positionierung von zu fügenden Karosserieteilen kann als "Standardverfahren" bezeichnet werden, das sich über viele Jahre bewährt hat. Die Maßhaltigkeit der Fahrzeugkarosserie hängt dabei zum einen davon ab, dass die zu fügenden Karosserieteile möglichst exakt in Bezug auf die "Anlage" positioniert sind und zum anderen, wie exakt die Anlage das darauf positionierte zu fügende Karosserieteil in Fügeposition bringt.

Aufgabe der Erfindung ist es, ein Verfahren zum Positionieren und Fügen von Karosserieteilen anzugeben, bei dem die Maßhaltigkeit der Fahrzeugkarosserie unabhängig davon ist, wie exakt die zu fügenden Karosserieteile auf den die Karosserieteile positionierenden Anlagen positioniert sind.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht darin, dass zwei miteinander zu verbindende Karosserieteile vor dem Fügen mittels ineinander eingreifender, an den zu fügenden Karosserieteilen vorgesehenen Formschlusselementen relativ zueinander positioniert und gegen Verrutschen gesichert werden. Konkret werden bei dem erfindungsgemäßen Verfahren folgende Schritte durchlaufen:
- Bereitstellen eines ersten Karosserieteils, das mindestens ein erstes Formschlusselement aufweist,
- Bereitstellen eines zweiten Karosserieteils, das mindestens ein mit dem ersten Formschlusselement zusammenwirkendes zweites Formschlusselement aufweist,
- Aneinandersetzen der beiden Karosserieteile, so dass die Formschlusselemente ineinander eingreifen und die beiden Karosserieteile zumindest in bestimmten Richtungen gegen Verrutschen gesichert und somit in einer vorgegebenen Soll-Relativposition fixiert sind;
- Dauerhaftes Verbinden der beiden Karosserieteile.

Vorzugsweise weist jedes der beiden miteinander zu verbindenden Karosserieteile mindestens zwei oder genau zwei Formschlusselemente auf, so dass die beiden miteinander zu verbindenden Bauteile an mindestens zwei oder an genau zwei "Punkten" vorfixiert, d. h. gegen Verrutschen gesichert werden.

Vorzugsweise sind die Formschlusselemente integraler Bestandteil der zu fügenden Karosserieteile. Bei den Formschlusselementen kann es sich um weibliche und dazu komplementäre männliche Teile handeln.

Es kann vorgesehen sein, dass das eine zu fügende Karosserieteil ausschließlich mit männlichen und das andere zu fügende Karosserieteil ausschließlich mit weiblichen Formschlusselementen versehen ist.

Nach der Erfindung ist es vorgesehen, dass ein erstes Formschlusselement des ersten Karosserieteils und ein erstes Formschlusselement des zweiten Karosserieteils die Karosserieteile in zwei Dimensionen gegen Verrutschen sichern und ein zweites Formschlusselement des ersten Karosserieteils und ein damit zusammenwirkendes zwei Formschlusselement des zweiten Karosserieteils die Karosserieteile in einer Dimension gegen Verdrehen sichern.

Bei dem ersten Formschlusselement des ersten Karosserieteils kann es sich um ein zapfenartiges Element und bei dem ersten Formschlusselement des zweiten Karosserieteils um ein dazu komplementäres Loch bzw. eine dazu komplementäre Ausnehmung bzw. Einbuchtung handeln.

Bei dem zweiten Formschlusselement des ersten Karosserieteils kann es sich ebenfalls um ein zapfenartiges Teil und bei dem zweiten Formschlusselement des zweiten Karosserieteils um ein Langloch oder um eine längliche Einbuchtung handeln, in dem bzw. in der das zapfenartige Element in einer Dimension gleiten kann. Dadurch wird erreicht, dass die beiden zu fügenden Karosserieteile spannungsfrei relativ zueinander positioniert werden können. Die zapfenartigen Teile können "gestanzt" sein, d. h. integraler Bestandteil des betreffenden zu fügenden Karosserieteils sein. Die Löcher können durchgestanzt sein.

Im folgenden wird die Erfindung im Zusammenhang mit der Zeichnung näher erläutert.

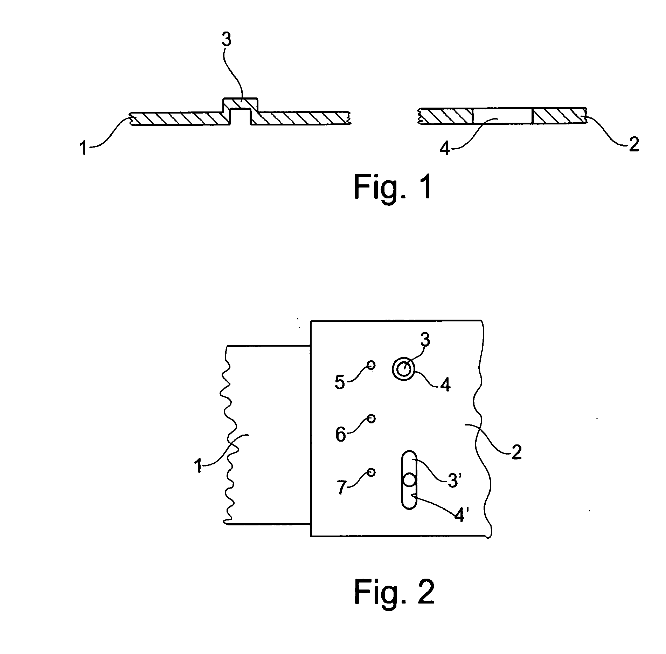

Fig. 1 zeigt ein erstes Karosserieteil 1 und ein zweites Karosserieteil 2. Das erste Karosserieteil 1 weist eine "gestanzte zapfenartige Erhebung 3 auf, die in der Draufsicht z. B. kreisrund ist. Die Erhebung 3 kann auch eine andere Form haben.

Das zweite Karosserieteil 2 weist ein durchgestanztes Loch 4 auf, dessen Innendurchmesser dem Außendurchmesser des zapfenartigen Elements 3 entspricht. Wichtig ist, dass das Loch 4 komplementär in Bezug auf das zapfenartige Element 3 gestaltet ist. Anstatt eines Lochs 4 könnte in dem zweiten Karosserieteil 2 auch eine zu dem zapfenartigen Element 3 komplementäre Einbuchtung vorgesehen sein.

Fig. 2 zeigt eine Draufsicht auf die beiden Karosserieteile 1, 2 in gefügtem Zustand. Wie aus Fig. 2 ersichtlich ist, weist das erste Karosserieteil 1 zwei zapfenartig nach oben abstehende Erhebungen 3, 3' auf. Die Erhebung 3 greift formschlüssig in das Loch 4 ein. Durch die "Formschlusselemente" 3, 4 sind die beiden Karosserieteile 1, 2 in zwei Dimensionen, nämlich in der Zeichenebene, gegen Verrutschen und Verdrehen relativ zueinander gesichert.

Das zapfenartige Element 3' greift in ein in dem zweiten Karosserieteil 2 vorgesehenes Langloch 4' ein. Die Formschlusselemente 3', 4' positionieren die beiden Karossserieteile 1, 2 somit in nur einer Dimension relativ zueinander, d. h. quer zur Längsrichtung des Langlochs 4'.

Bei der Fertigung einer Fahrzeugkarosserie werden die beiden Karosserieteile 1, 2 jeweils z. B. manuell oder mittels eines Roboters relativ zueinander positioniert. Dabei kommt es nicht so sehr darauf an, dass die beiden Karosserieteile 1, 2 ganz exakt in Bezug auf die jeweilige Anlage bzw. in Bezug auf den jeweiligen Positionierungsroboter positioniert sind. Vielmehr kommt es lediglich darauf an, dass die Positionierungsanlagen bzw. Positionierungsroboter die beiden zu fügenden Karosserieteile 1, 2 in eine Relativposition bringen, in der die Formschlusselemente 3, 4 und 3', 4' ineinander eingreifen, wie dies in Fig. 2 dargestellt ist. Sind die beiden Karosserieteile 1, 2 durch die Formschlusselemente 3, 4 und 3', 4' exakt relativ zueinander positioniert, so können die Karosserieteile 1, 2 z. B. mittels eines Schweißroboters der Schweißpunkte 5 - 7 setzt, miteinander verbunden werden. Selbstverständlich können .die beiden Karosserieteile 1, 2 auch durch andere Verbindungsverfahren, wie z. B. Clinchen, Schrauben, Nieten etc. verbunden werden.

Alternativ zu einer automatisierten Positionierung der zu fügenden Bauteile ist z.B. auch ein manuelles Aufstecken bzw. ein manuelles Anbringen eines Bauteils auf ein anderes Bauteil bzw. an einem anderen Bauteil anstatt mittels konventioneller Spanntechnik möglich.

Wie bereits erwähnt, kommt es nicht darauf an, dass die zu fügenden Karosserieteile exakt in Bezug auf die Positionierungsanlage bzw. den Positionierungsroboter positioniert sind. Wichtig ist lediglich, dass die Positionierungsanlage bzw. der Positionierungsroboter mit einem "Suchalgorithmus", z. B. basierend auf einer Fuzzy Logic, ausgestattet ist, welche die exakte Relativposition, in der die beiden Karosserieteile 1, 2 miteinander verbunden werden sollen, findet und die beiden Karosserieteile 1, 2 entsprechend positioniert.

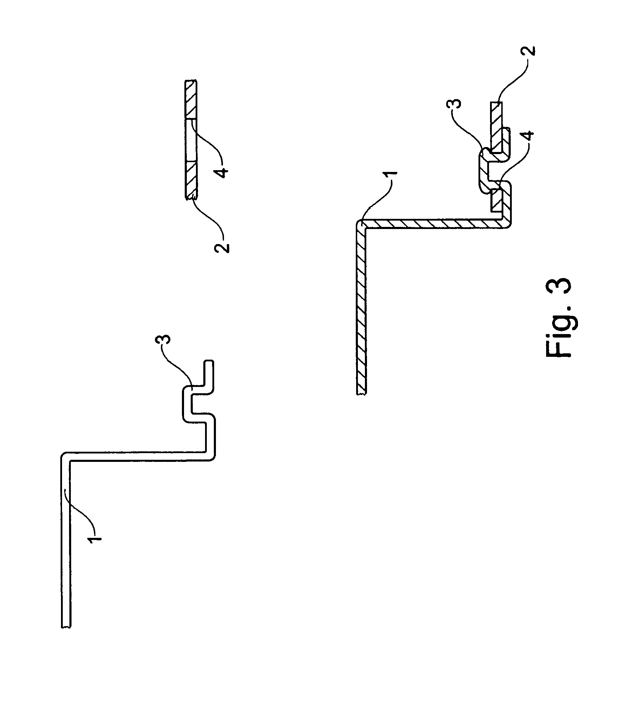

Fig. 3 zeigt ein Ausführungsbeispiel, bei dem das zapfenartige Element 3 nach dem Positionieren der beiden Karosserieteile 1, 2 "geclincht" wird. Die beiden Karosserieteile 1, 2 werden bei diesem Ausführungsbeispiel nach dem Positionieren unmittelbar durch die Formschlusselemente 3, 4 miteinander verbunden.

## Patentansprüche

1. Verfahren zum Positionieren und Fügen von Bauteilen (1, 2) mit folgenden Schritten:
- Bereitstellen eines ersten Bauteils (1), das mindestens ein Formschlusselement (3) aufweist,
- Bereitstellen eines zweiten Bauteils (2), das mindestens ein mit dem Formschlusselement (3) des ersten Bauteils (1) zusammenwirkendes Formschlusselement (4) aufweist,
- Aneinandersetzen der beiden Bauteile (1, 2), so dass die Formschlusselemente (3, 4) ineinander eingreifen und die beiden Bauteile (1, 2) zumindest in bestimmten Richtungen gegen Verrutschen sichern und in einer vorgegebenen Soll-Position halten,
- dauerhaftes Verbinden der beiden Bauteile (1, 2) miteinander,
**dadurch gekennzeichnet,**
- **dass** es sich bei dem ersten Bauteil (1) und bei dem zweiten Bauteil (2) jeweils um ein Karosserieteil einer Fahrzeugkarosserie handelt und
- **dass** ein erstes Formschlusselement (3) des ersten Karosserieteils (1) und ein erstes Formschlusselement (4) des zweiten Karosserieteils (2) die Karosserieteile (1, 2) in zwei Dimensionen gegen Verrutschen sichern und
- **dass** ein zweites Formschlusselement (3') des ersten Karosserieteils (1) und ein damit zusammenwirkendes zweites Formschlusselement (4') des zweiten Karosserieteils (2) die Karosserieteile (1, 2) in nur einer Dimension gegen Verrutschen bzw. Verdrehen sichern, wobei das zweite Formschlusselement (3') des ersten Karosserieteils (1) in einer anderen Dimension in Bezug auf das zweite Formschlusselement (4') des zweiten Karosserieteils (2) gleiten kann.

2. Verfahren nach Anspruch 1, **dadurch gekennzeichnet, dass** die Formschlusselemente (3, 4) integraler Bestandteil der Karosserieteile (1, 2) sind.

3. Verfahren nach einem der Ansprüche 1 oder 2,
**dadurch gekennzeichnet, dass** eines der Formschlusselemente (3) ein männliches Teil und eines der Formschlusselemente (4) ein weibliches Teil ist.

4. Verfahren nach einem der Ansprüche 1 bis 3,
**dadurch gekennzeichnet, dass** das erste Karosserieteil (1) mit mehreren männlichen Formschlusselementen (3, 3') und das zweite Karosserieteil (2) mit mehreren weiblichen Formschlusselementen (4, 4') versehen ist.

5. Verfahren nach Anspruch 4,
**dadurch gekennzeichnet, dass** das erste Karosserieteil (1) ausschließlich mit männlichen Formschlusselementen (3, 3') und das zweite Karosserieteil (2) ausschließlich mit weiblichen Formschlusselementen (4, 4') versehen ist.

6. Verfahren nach einem der Ansprüche 1 bis 5,
**dadurch gekennzeichnet, dass** es sich bei dem ersten Formschlusselement des ersten Karosserieteils um ein zapfenartiges Element (3) bzw. eine Erhebung (3) und bei dem ersten Formschlusselement (4) des zweiten Karosserieteils (2) um ein dazu komplementäres Loch bzw. eine dazu komplementäre Einbuchtung handelt.

7. Verfahren nach Anspruch 6, **dadurch gekennzeichnet, dass** es sich bei dem zweiten Formschlusselement (3') des ersten Karosserieteils (1) um ein zapfenartiges Element bzw. um eine Erhebung und bei dem zweiten Formschlusselement des zweiten Karosserieteils (2) um ein dazu komplementäres Langloch bzw. eine dazu komplementäre Einbuchtung handelt.

8. Verfahren nach einem der vorangehenden Ansprüche,
**dadurch gekennzeichnet, dass** es sich bei dem bzw. bei den zapfenartigen Elementen bzw. Erhebungen um Anstanzungen eines der beiden Karosserieteile (1, 2) handelt.

9. Verfahren nach einem der vorangehenden Ansprüche,
**dadurch gekennzeichnet, dass** es sich bei den Löchern bzw. Einbuchtungen um Durchstanzungen eines der beiden Karosserieteile (1, 2) oder Einstanzungen handelt.

10. Verfahren nach einem der vorangehenden Ansprüche,
**dadurch gekennzeichnet, dass** das erste Karosserieteil (1) relativ zu einer ersten Anlage bzw. relativ zu einem ersten Roboter und das zweite Karosserieteil (2) relativ zu einer zweiten Anlage bzw. relativ zu einem zweiten Roboter positioniert wird und die beiden Karosserieteile (1, 2) mittels der beiden Anlagen bzw. Roboter relativ zueinander ausgerichtet werden, derart, dass die Formschlusselemente (3, 4) ineinander eingreifen:

## Claims

1. A method for positioning and joining components (1, 2), comprising the following steps:
- providing a first component (1), which has at least one form-fit element (3),
- providing a second component (2), which has at least one form-fit element (4) cooperating with the form-fit element (3) of the first component (1),
- setting the two components (1, 2) against one another so the form-fit elements (3, 4) engage in one another and secure the two components (1, 2) against slipping, at least in certain directions, and hold them in a predetermined desired position,
- permanent connection of the two components (1, 2) to one another,
**characterised in that**
- the first component (1) and the second component (2) are in each case a body part of a vehicle body and
- **in that** a first form-fit element (3) of the first body part (1) and a first form-fit element (4) of the second body part (2) secure the body parts (1, 2) against slipping in two dimensions and
- **in that** a second form-fit element (3') of the first body part (1) and a second form-fit element (4') cooperating therewith of the second body part (2) secure the body parts (1, 2) against slipping or rotation in only one dimension, the second form-fit element (3') of the first body part (1) being able to slide in another dimension in relation to the second form-fit element (4') of the second body part (2).

2. A method according to claim 1, **characterised in that** the form-fit elements (3, 4) are an integral component of the body parts (1, 2).

3. A method according to either of claims 1 or 2, **characterised in that** one of the form-fit elements (3) is a male part and one of the form-fit elements (4) is a female part.

4. A method according to any one of claims 1 to 3, **characterised in that** the first body part (1) is provided with a plurality of male form-fit elements (3, 3') and the second body part (2) is provided with a plurality of female form-fit elements (4, 4').

5. A method according to claim 4, **characterised in that** the first body part (1) is provided exclusively with male form-fit elements (3, 3') and the second body part (2) is provided exclusively with female form-fit elements (4, 4').

6. A method according to any one of claims 1 to 5, **characterised in that** the first form-fit element of the first body part is a pin-like element (3) or an elevation (3) and the first form-fit element (4) of the second body part (2) is a hole, which is complementary thereto, or a recess, which is complementary thereto.

7. A method according to claim 6, **characterised in that** the second form-fit element (3') of the first body part (1) is a pin-like element or an elevation and the second form-fit element of the second body part (2) is a slot which is complementary thereto or a recess which is complementary thereto.

8. A method according to any one of the preceding claims, **characterised in that** the pin-like element(s) or elevation(s) are stamped-on parts of one of the two body parts (1, 2).

9. A method according to any one of the preceding claims, **characterised in that** the holes or recesses are stamped-through parts of one of the two body parts (1, 2) or stamped-in parts.

10. A method according to any one of the preceding claims, **characterised in that** the first body part (1) is positioned relative to a first mechanism or relative to a first robot and the second body part (2) is positioned relative to a second mechanism or relative to a second robot and the two body parts (1, 2) are oriented relative to one another by means of the two mechanisms or robots in such a way that the form-fit elements (3, 4) engage in one another.

## Revendications

1. Procédé de positionnement et d'assemblage de composants (1, 2) comprenant les étapes suivantes :
- fourniture d'un premier composant (1) ayant au moins un élément de liaison par la forme (3),
- fourniture d'un second composant (2) ayant au moins un élément de liaison par la forme (4), coopérant avec l'élément de liaison par la forme (3) du premier composant (1),
- mise en place l'un par rapport à l'autre des deux composants (1, 2) pour que les éléments de liaison par la forme (3, 4) s'interpénètrent et que les deux composants (1, 2) soient fixés en coulissement au moins dans certaines directions et tiennent dans une position de consigne prédéfinie,
- liaison permanente des deux composants (1, 2) l'un à l'autre, procédé **caractérisé en ce que**
- le premier composant (1) et le second composant (2), sont constitués chacun par une pièce de carrosserie d'un véhicule, et
- un premier élément de liaison par la forme (3) du premier composant de carrosserie (1) et un premier élément de liaison par la forme (4) du second composant de carrosserie (2), fixent dans deux directions les composants de carrosserie (1, 2) contre leur glissement, et
- un second élément de liaison par la forme (3') du premier composant de carrosserie (1) et un second élément de liaison par la forme (4') du second composant de carrosserie (2) coopérant avec le précédent, fixent les composants de carrosserie (1, 2) seulement dans une direction contre le glissement et la rotation,
- le second élément de liaison par la forme (3') du premier composant de carrosserie (1), pouvant glisser dans une autre direction par rapport au second élément de liaison par la forme (4') du second composant de carrosserie (2).

2. Procédé selon la revendication 1,
**caractérisé en ce que**
les éléments de liaison par la forme (3, 4) constituent des composants intégrés à des composants de carrosserie (1, 2).

3. Procédé selon la revendication 1 ou 2,
**caractérisé en ce que**
l'un des éléments de liaison par la forme (3) est une pièce mâle et l'autre élément de liaison par la forme (4) est une pièce femelle.

4. Procédé selon l'une des revendications 1 à 3,
**caractérisé en ce que**
le premier composant de carrosserie (1) comporte plusieurs éléments de liaison par la forme, mâles (3, 3') et le second composant de carrosserie (2) comporte plusieurs éléments de liaison par la forme, femelles (4, 4').

5. Procédé selon la revendication 4,
**caractérisé en ce que**
le premier composant de carrosserie (1) est muni exclusivement d'éléments de liaison par la forme, mâles (3, 3'), et le second composant de carrosserie (2) est muni exclusivement d'éléments de liaison par la forme, femelles (4, 4').

6. Procédé selon l'une des revendications 1 à 5,
**caractérisé en ce que**
le premier élément de liaison par la forme du premier composant de carrosserie est un élément en forme de broche (3) ou de bossage (3) et le premier élément de liaison par la forme (4) de la seconde pièce de carrosserie (2) est un orifice complémentaire ou une cavité complémentaire.

7. Procédé selon la revendication 6,
**caractérisé en ce que**
le second élément de liaison par la forme (3') du premier composant de carrosserie (1) est un élément en forme de broche ou de bossage et le second élément de liaison par la forme du second composant de carrosserie (2) est un trou oblong complémentaire ou une cavité complémentaire.

8. Procédé selon l'une des revendications précédentes,
**caractérisé en ce que**
le ou les éléments en forme de broches ou de bossages sont des parties embouties de l'un des deux composants de carrosserie (1, 2).

9. Procédé selon l'une des revendications précédentes,
**caractérisé en ce que**
les trous ou les cavités sont des estampages de l'un des deux composants de carrosserie (1, 2) ou des emboutissages en creux.

10. Procédé selon l'une des revendications précédentes,
**caractérisé en ce que**
le premier composant de carrosserie (1) est positionné par rapport à une première installation ou par rapport à un premier robot et le second composant de carrosserie (2) est positionné par rapport à une seconde installation ou un second robot, et
les deux composants de carrosserie (1, 2) sont alignés à l'aide des deux installations ou des robots, l'un par rapport à l'autre pour imbriquer les éléments de liaison par la forme (3, 4).
